# EUROPÄISCHE PATENTSCHRIFT

(11) **EP 1 671 045 B1**
(45) Veröffentlichungstag und Bekanntmachung des Hinweises auf die Patenterteilung: **05.09.2007**
(21) Anmeldenummer: 04765465.2
(22) Anmeldetag: 22.09.2004
(51) Int. Cl.: F16D 23/06

(54) **SCHALTKUPPLUNG FÜR EIN SCHALTGETRIEBE**
CLUTCH FOR A MANUAL GEARBOX
EMBRAYAGE CONÇU POUR UNE BOITE DE VITESSES

(30) Priorität: 11.10.2003 DE 10347266
(43) Veröffentlichungstag der Anmeldung: 21.06.2006
(73) Patentinhaber: Schaeffler KG, 91074 Herzogenaurach (DE)
(72) Erfinder: SCHWUGER, Josef, 91074 Herzogenaurach (DE); BÖSSNER, Ralf, 91217 Hersbruck (DE); MARTIN, Reiner, 96178 Pommersfelden (DE)
(86) Internationale Anmeldenummer: PCT/EP2004/010590
(87) Internationale Veröffentlichungsnummer: WO 2005/036007

(56) Entgegenhaltungen:
- EP-A- 1 239 175
- DE-C- 318 115
- FR-A- 907 307

## Beschreibung

### Gebiet der Erfindung

Die Erfindung betrifft eine Schaltkupplung für ein Schaltgetriebe zum Kuppeln eines Gangrades an seine Getriebewelle, bestehend aus einer Getriebewelle, zumindest einem Gangrad, welches drehbar auf der Getriebewelle angebracht ist, einem Kupplungskörper, der drehfest mit dem Gangrad verbunden und mit einer ersten Kupplungsverzahnung versehen ist, und einer Schaltmuffe, die auf der Getriebewelle drehfest und axial verschiebbar angebracht und mit einer axial verlaufenden zweiten Kupplungsverzahnung versehen ist, wobei die zweite Kupplungsverzahnung bei axialer Bewegung der Schaltmuffe auf das Gangrad zu mit der ersten Kupplungsverzahnung in Eingriff gebracht werden kann.

Einsatzgebiete derartiger Schaltkupplungen sind beispielsweise mehrstufige manuelle oder automatisierte Schaltgetriebe, in denen der Kraftfluss von einer Getriebewelle zu einem auf dieser gelagerten Gangrad beispielsweise über Klauenkupplungen hergestellt wird. Dabei ist mit dem Gangrad ein Kupplungskörper drehfest verbunden, in den eine Kupplungsverzahnung eingebracht ist. Eine drehfest mit der Getriebewelle verbundene Schaltmuffe ist auf der Getriebewelle axial verschiebbar angebracht. Zu diesem Zweck greift eine innere Kerbverzahnung im Nabenteil der Schaltmuffe in eine korrespondierende Außenkerbverzahnung auf der Getriebewelle ein. Weiterhin ist in die Schaltmuffe eine Kupplungsverzahnung eingebracht, die bei axialer Verschiebung der Schaltmuffe auf das Gangrad zu in die Kupplungsverzahnung des Kupplungskörpers eingreift und damit das Drehmoment zwischen Getriebewelle und Gangrad überträgt.

Im Allgemeinen bewegen sich die Schaltmuffe und das Gangrad mit unterschiedlichen Drehzahlen. Um ein sanftes, lautloses Schalten zu ermöglichen und den Verschleiß an den Kupplungsteilen zu minimieren, werden die Drehzahlen der Bauteile aneinander angepaßt, bevor die Kupplungsverzahnungen ineinander eingreifen. Dies wird mit Hilfe von, zwischen Gangrad und Schaltmuffe angeordneten, Synchronringen bewerkstelligt. Die Synchronringe sind mit konischen Reibflächen versehen, die miteinander in Eingriff gebracht werden können. Dabei sind die Synchronringe abwechselnd mit dem Gangrad bzw. der Getriebewelle verbunden. Während des Schaltvorgangs werden zuerst die Reibflächen der Synchronring in Eingriff gebracht. Dabei verhindert eine auf dem Außenumfang des äußeren Synchronrings angebrachte Außenverzahnung das Eingreifen der Kupplungsverzahnungen der Schaltmuffe in die des Kupplungskörpers, solange diese Bauteile unterschiedliche Drehzahlen aufweisen. Sind die Drehgeschwindigkeiten angeglichen gibt die Sperrverzahnung den Weg frei und der Schaltvorgang kann zu Ende geführt werden.

Eine derartige Vorrichtung ist beispielsweise in der DE 101 11 573 dargestellt. Es ist eine zweiteilige Schaltmuffe beschrieben, die drehfest mit einer Getriebewelle verbunden ist. Die Schaltmuffe ist mit einer radial innen liegenden Kupplungsverzahnung versehen. In axialer Richtung vor und hinter der Schaltmuffe sind Gangräder angebracht, die drehbar auf der Getriebewelle gelagert sind. Mit jedem Gangrad ist drehfest ein Kupplungskörper verbunden, der mit einer radial außen liegenden Kupplungsverzahnung versehen ist. Zwischen Kupplungskörper und Schaltmuffe sind mehrere Synchronringe angeordnet. Die Synchronringe sind mit Reibflächen versehen, wobei die Reibflächen benachbarter Synchronringe in Eingriff gebracht werden können. Bei einem Schaltvorgang wird die Schaltmuffe in axiale Richtung auf eins der beiden Gangräder zu bewegt. Dies geschieht üblicherweise mit Hilfe einer hier nicht dargestellten Schaltgabel, die auf einer hier ebenfalls nicht dargestellten Schaltstange befestigt ist und in eine Führungsnut am Außenumfang der Schaltmuffe eingreift. Bei einer axialen Verschiebung der Schaltmuffe beaufschlagt ein an ihr angebrachtes Federelement den äußeren Synchronring mit einer Kraft in axialer Richtung, wodurch der Prozess der Vorsynchronisation gestartet wird. Der äußeren Synchronring ist bis auf ein kleines Verdrehspiel drehfest mit der Getriebewelle verbunden und mit einer Sperrverzahnung versehen.

Nachteilig wirkt sich bei dieser Ausführungsform der hohe Bauraumbedarf des außen liegenden Verschiebemechanismuses der Schaltmuffe aus. Weiterhin wirken aufgrund des großen Hebelweges zwischen Schaltstange und Schaltmuffe hohe Kipp- und Biegemomente auf die Schaltgabel und die Schaltstange. Dies führt zu erhöhtem Verschleiß und einer kürzeren Lebensdauer der Komponenten.

DE 318115 zeigt eine Kupplung für zwei entgegengesetzt auf einer Welle umlaufende Scheiben, in deren Nabenbohrungen ein auf der Welle befestigter, axial verschiebbarer Ring eingreift mit einem beweglichen Kupplungsteil, wobei der Kupplungsteil durch eine in einer Längsbohrung der Welle angeordnete Stange verschoben wird.

### Zusammenfassung der Erfindung

Der Erfindung liegt die Aufgabe zugrunde, die geschilderten Nachteile zu vermeiden und somit einen bauraumsparenden Schaltmechanismus zu schaffen, der zusätzlich die Führung und die Steifigkeit des Schaltsystems verbessert.

Erfindungsgemäß wird diese Aufgabe dadurch gelöst, dass die Getriebewelle als Hohlwelle ausgeführt ist, wobei diese an der Position der Schaltmuffe und über den Verschiebeweg der Schaltmuffe mit zumindest einer Aussparung versehen ist. Weiterhin ist die Schaltmuffe an dem an der Getriebewelle anliegenden Innenumfang mit einer radialen Aufnahme versehen, die zur Getriebewelle hin offen ist. Die Schaltstange verläuft konzentrisch innerhalb der Getriebewelle und das Verbindungselement ist als radial verlaufender Mitnehmer ausgeführt, der durch die Aussparung der Getriebewelle hindurch in die Aufnahme der Schaltmuffe eingreift.

Durch die Anordnung der Schaltstange innerhalb der Getriebehohlwelle reduziert sich der für den Schaltmechanismus benötigte Bauraum erheblich. Die an der Schaltstange angebrachten Verbindungselemente greifen durch die Aussparungen der Getriebewelle in die Aufnahmen der Schaltmuffe ein, und übertragen die axiale gerichteten Schaltbewegungen von der Schaltwelle auf die Schaltmuffe. Durch den kürzeren Abstand zwischen Schaltstange und dem Angriffspunkt der Verbindungselemente an der Schaltmuffe werden die Biegemomente auf die Verbindungselemente reduziert. Zusätzlich kann durch die Verwendung mehrerer Verbindungselemente, die in Umfangsrichtung an der Schaltstange verteilt sind, das Biegemoment auf die Schaltstange deutlich reduziert werden. Diese Punkte führen dazu, dass das Verschiebesystem kostengünstiger und gewichtsparend ausgeführt werden kann.

Weiterhin können die Getriebewelle und die Schaltstange durch formschlüssige Mittel gegen relative Verdrehung in Umfangsrichtung gesichert werden. Mit dieser Maßnahme wird erreicht, dass die Verbindungselemente in Umfangsrichtung fest in der Aufnahme der Schaltmuffe liegen und damit verschleißfördernde Reibung zwischen diesen beiden Teilen verhindert wird.

Die Aufnahme der Schaltmuffe kann so ausgeführt sein, dass pro Verbindungselement eine Aufnahme vorgesehen ist, in die es eingreift. In einer weiteren Ausführungsform ist die Aufnahme als ringförmig umlaufende Nut ausgebildet sein. Weiterhin ist vorgesehen, dass die Schaltmuffe aus zwei Komponenten besteht, die beide einen Teil der Nabe tragen und aneinander befestigt sind. Vorteilhafterweise sind die beiden Komponenten der Schaltmuffe durch einen spanlosen Umformprozess aus Blechteilen gefertigt.

Durch die Ausführung der Schaltmuffe aus zwei Komponenten wird die Montage der Verbindungselemente an der Schaltstange deutlich vereinfacht. Nach dem Einführen der Schalstange in die Getriebehohlwelle und der Montag einer der zwei Schaltmuffenkomponenten können die Verbindungselemente, beispielsweise mittel Bolzenpressung, an der Schaltstange befestigt werden. Anschließend wir die zweite Schaltmuffenkomponente montiert und die Verbindung zur ersten Komponente hergestellt. Die Komponenten können mittels Schweiß-, Niet- oder Klebverbindungen aneinander befestigt werden.

Die Aufnahmen können derart vorgesehen werden, dass sie in die Berührungsflächen der beiden Komponenten eingebracht werden. Durch die Verwendung spanlos hergestellter Blechumformteile können die komplexen Strukturen der Schaltmuffe auf einfachem Weg realisiert werden. Weiterhin führt der Einsatz spanlos hergestellter Blechumformteile in der Großserien- und Massenproduktion zu einer erheblichen Kostenreduktion und Gewichtsvorteilen.

Weiterhin ist vorteilhaft, dass die Schaltstange in der Getriebewelle längsverschiebbar gelagert ist. Dabei kann die Lagerung der Schaltstange in der Getriebewelle als Gleitlager oder als Wälzlager ausgeführt sein. Dies führt zu einer Verringerung der Reibung und damit zu einer Verringerung der Schaltkräfte bzw. zu einer Erhöhung des Schaltkomforts.

Nach der Erfindung ist ein äußerer Synchronring zwischen Gangrad und Schaltmuffe angebracht, der mit einer inneren konisch ausgebildeten Reibfläche und einer radial nach außen stehenden Sperrverzahnung versehen ist. Der äußere Synchronring ist bis auf einen kleinen Verdrehwinkel mit der Getriebewelle drehfest verbunden. Ein zweiter Synchronring ist zwischen Gangrad und äußerem Synchronring angebracht und mit einer äußeren konisch ausgebildeten Reibfläche versehen. Der zweite Synchronring ist verdrehfest mit dem Kupplungskörper verbunden. Die äußere Reibfläche des zweiten Synchronrings kann mit der inneren Reibfläche des äußeren Synchronrings in Eingriff gebracht werden.

Weiterhin kann der zweite Synchronring mit einer inneren konischen Reibfläche versehen sein und zwischen Gangrad und zweitem Synchronring ein innerer Synchronring angebracht sein, der mit einer äußeren konischen Reibfläche versehen ist. Die innere Reibfläche des zweiten Synchronrings kann mit der äußeren Reibfläche des inneren Synchronrings in Eingriff gebracht werden. Zusätzlich ist vorgesehen, dass zwischen dem äußeren Synchronring und der Schaltmuffe mindestens ein Federelement angeordnet ist, welches bei axialen Verschiebungen der Schaltmuffe auf das Gangrad zu eine axiale Kraft von der Schaltmuffe auf den äußeren Synchronring überträgt und sich dabei an der Schaltmuffe abstützt.

Der Einsatz einer Konussynchronisation bzw. einer Doppelkonussynchronisation erlaubt es die Drehzahlen von Schaltmuffe und Kupplungskörper anzugleichen, bevor die Kupplungsverzahnung der beiden Bauteile ineinander eingreifen. Dadurch wird der Verschleiß der Kupplungskomponenten gesenkt, die Lebensdauer erhöht und es entfallen unangenehmen Ratschgeräusche beim Einlegen eines Ganges.

Weiterhin ist vorgesehen, dass das Federelement in der Schaltmuffe aufgenommen ist. Dabei kann es sich bei dem Federelement um eine Schraubenfeder, eine radial auf einer Nabe der Schaltmuffe zentrierte Tellerfeder oder um ein Federelement handeln, das in einem Gehäuse aufgenommen ist und die Schaltkraft über einen zumindest teilweise im Gehäuse gehaltenen Rastkörper auf den äußeren Synchronring überträgt. Im letzteren Fall kann der Rastkörper an einer am äußeren Synchronring ausgebildeten Rampe entlang laufen, wobei die Konturlinie der Rampe in Richtung des Gangrades wenigstens anfangs einen ansteigenden Verlauf aufweist.

### Kurze Beschreibung der Zeichnung

Weitere Merkmale der Erfindung ergeben sich aus der nachfolgenden Beschreibung und aus der Zeichnung, in der ein Ausführungsbeispiel der Erfindung vereinfacht dargestellt ist. Es zeigt:

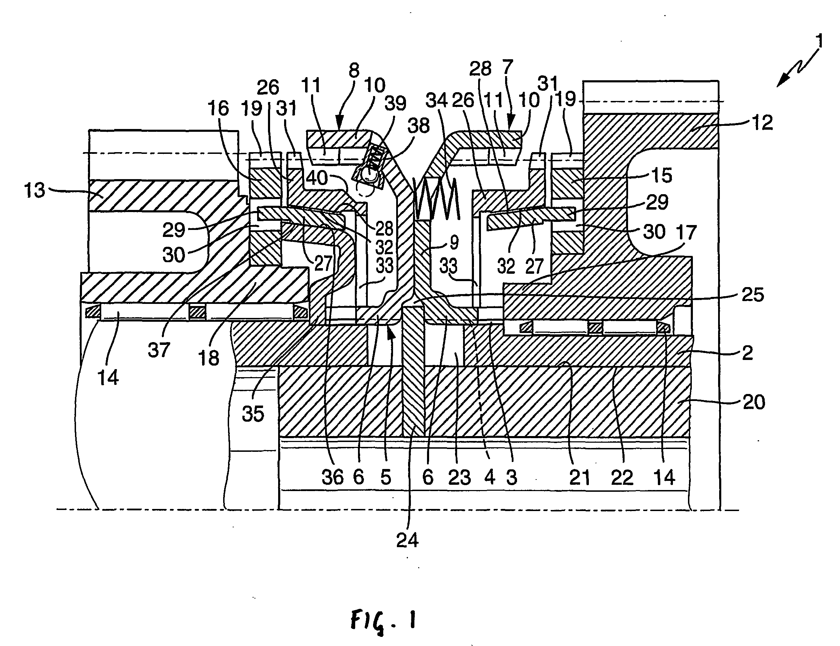

- Figur 1: einen Längsschnitt durch einen erfindungsgemäße Schaltkupplung für ein Schaltgetriebe.

### Ausführliche Beschreibung der Zeichnung

In Figur 1 ist mit der Bezugszahl 1 eine Schaltkupplung für ein Schaltgetriebe dargestellt. Auf einer Getriebewelle 2, die als Hohlwelle ausgeführt ist, ist eine erste Verzahnung 3 angebracht. Auf der Getriebewelle 2 ist eine Schaltmuffe 5 mit einem Nabenteil 6 angeordnet. Diese setzt sich aus einem ersten und einem zweiten Blechumformteil 7, 8 zusammen, die ringförmig ausgeführt sind und jedes für sich die Getriebewelle 2 umgreift. Jedes der beiden Blechumformteile 7, 8 ist in einem spanlosen Umformprozess aus einem Stahlblech gefertigt und besteht aus einem Teil des Nabenteils 6, einem im Wesentlichen radial verlaufenden Abschnitt 9 und einem im Wesentlichen axial verlaufenden Abschnitt 10. Das Nabenteil 6 ist mit einer zweiten Verzahnung 4 versehen, die in die erste Verzahnung 3 der Getriebewelle 2 eingreift, wodurch die Schaltmuffe 5 drehfest mit der Getriebewelle 2 verbunden wird. Unter Verzahnung werden in diesem Zusammenhang formschlüssige Verbindungen, die eine Axialverschiebung zulassen, wie Kerbverzahnungen oder Keile und Nuten, verstanden.

Weiterhin sind die Blechumformteile 7, 8 derart ausgeführt, dass sie im Bereich des radial verlaufenden Abschnittes 9 direkt aneinander angrenzen, und dort drehfest miteinander verbunden sind. Dabei sind beispielsweise Schweißverbindungen, Nietverbindungen oder Klebverbindungen denkbar.

In die axial verlaufenden Abschnitte 10 der Schaltmuffe 5 ist eine innen liegende erste Kupplungsverzahnung 11 angebracht, deren Zähne sich in axialer Richtung erstrecken. Vorteilhafterweise sind die einzelnen Kupplungszähne, wie bei Schaltkupplungen allgemein üblich, dachförmig ausgeführt und mit Hinterschnitten versehen.

Die Schaltmuffe 5 ist zwischen einem ersten und einem zweiten Gangrad 12, 13 angeordnet und in axialer Richtung verschiebbar. Die Gangräder 12, 13 sind über Wälzlager 14 drehbar auf der Getriebewelle 2 gelagert. Jedem der Gangräder 12, 13 ist ein Kupplungskörper 15, 16 zugeordnet. Die Kupplungskörper 15, 16 sind ringförmig ausgeführt, umgreifen die Getriebewelle 2 und sind jeweils auf einem Absatz 17, 18 der Gangräder 12, 13 auf der der Schaltmuffe 5 zugewandten Seite des jeweiligen Gangrades 12,13 drehfest mit diesem verbunden. Die Kupplungskörper 15, 16 sind mit radial nach außen stehenden zweiten Kupplungsverzahnungen 19 versehen, in die die erste Kupplungsverzahnung 11 der Schaltmuffe 5 bei axialer Verschiebung formschlüssig eingreifen kann.

Innerhalb der Getriebewelle 2 ist eine Schaltstange 20 angeordnet, die in dem vorliegenden Ausführungsbeispiel ebenfalls als Hohlwelle ausgebildet ist. Die Schaltstange 20 ist innerhalb der Getriebewelle 2 axial verschiebbar angeordnet. Die äußeren Mantelfläche 21 der Schaltstange 20 liegt an der inneren Mantelfläche 22 der Getriebewelle 2 an. Zur drehfesten Verbindung von Getriebewelle 2 und Schaltstange 20 sind formschlüssige Verbindungen wie z. B. Kerbverzahnungen oder Nuten und in diese eingreifende Rippen die auf der anderen Hohlwelle liegen, vorgesehen. Die axiale Erstreckung der Schaltstange 20 innerhalb der Getriebewelle 2 ist so gewählt, dass sie bis in den Bereich hineinragt, der von der Schaltmuffe 5 umfasst wird.

Die Getriebewelle 2 ist im Bereich der Neutralstellung der Schaltmuffe 5 mit Aussparungen 23 versehen. Die axiale Ausdehnung der Aussparungen 23 in beide Richtungen entspricht jeweils mindestens dem nötigen Verschiebeweg der Schaltmuffe 5 zum Ankuppeln des jeweiligen Gangrades 12, 13 an die Getriebewelle 2. Zum Übertragen der axialen Schaltbewegungen der Schaltstange 20 auf die Schaltmuffe 5 sind Verbindungselemente 24 vorgesehen, die in der dargestellten Ausführungsform als radial verlaufende Mitnehmer ausgeführt sind. Die Verbindungselemente 24 sind an der Schaltstangen 20 befestigt und greifen durch die Aussparungen 23 der Getriebewelle 2 in die Aufnahmen 25 der Schaltmuffe 5. Um die Reibung zwischen Getriebewelle 2 und Schaltstange 20 während des Schaltvorgangs zu minimieren ist eine Linearlagerung zwischen diesen beiden Komponenten vorgesehen. Denkbar sind hier sowohl Gleitlager- als auch Wälzlagerausführungen.

In einem ersten Ausführungsbeispiel der Erfindung, dargestellt auf der rechten Seite von Figur 1, ist zum Angleichen der Drehzahlen von Getriebewelle 2 und Gangrad 12 während des Schaltvorgangs eine Anordnung von Synchronringen vorgesehen. Dabei ist mit 26 ein äußerer Synchronring und mit 27 ein zweiter Synchronring bezeichnet. Der zweite Synchronring 27 ist mit einer konisch ausgeführten Reibfläche 28 am Außenumfang versehen. Zumindest teilweise axial abstehende Vorsprünge 29 greifen in dafür vorgesehene Ausnehmungen 30 im ersten Kupplungskörper 15 ein, wodurch der zweite Synchronringe 27 drehfest mit dem ersten Kupplungskörper 15 verbunden wird. Radial außerhalb des zweiten Synchronrings 27 ist der äußere Synchronring 26 angebracht, der an seinem äußeren Umfang mit einer Sperrverzahnung 31 und an seinem Innenumfang mit einer konischen Reibfläche 32 versehen ist. Die Reibfläche 32 des äußeren Synchronrings 26 kann mit der Reibfläche 28 des zweiten Synchronrings 27 in Eingriff gebracht werden. Wie bei derartigen Schaltkupplungen üblich ist der äußere Synchronring 26, bis auf einen kleinen Verdrehwinkel, drehfest mit der Schaltmuffe 5 oder der Getriebewelle 2 verbunden. Im vorliegenden Fall ist der äußere Synchronring 26 über radial nach innen gerichtete Mitnehmernasen 33 mit der Getriebewelle 2 verbunden. Um trotz der Mitnehmernasen 33 den nötigen Verschiebeweg zur Verfügung zu haben, wird vorteilhafterweise das Nabenteil 6 der Schaltmuffe 5 umfangseitig im Bereich der Mitnehmernasen 33 mit Aussparungen versehen. Weiterhin ist ein Federelement 34 dargestellt, welches bei axialer Verschiebung der Schaltmuffe 5 in Richtung des ersten Gangrades 12 den äußeren Synchronring 26 mit einer axial auf das erste Gangrad 12 zu gerichteten Kraft beaufschlagt.

In einer zweiten Ausführungsform, die im linken Teil der Figur 1 dargestellt ist, ist zusätzlich ein innerer Synchronring 35 angebracht. Der innere Synchronring 35 ist innerhalb des zweiten Synchronrings 27 angebracht und drehfest mit der Getriebewelle 2 verbunden. An seinem Außenumfang ist eine Reibfläche 36 vorgesehen. Diese Reibfläche 36 kann mit einer am Innenumfang des zweiten Synchronrings 27 angebrachten Reibfläche 37 in Eingriff gebracht werde. Das Federelement 34 ist in diesem Ausführungsbeispiel in einem Gehäuse 38 gehalten und beaufschlagt einen als Rastkugel ausgeführten Rastkörper 39 mit einer Kraft, wobei der Rastkörper 39 ebenfalls in dem Gehäuse 38 gehalten wird. Bei einer axialen Verschiebung der Schaltmuffe 5 in Richtung des zweiten Gangrades 13 läuft der Rastkörper 39 an einer am äußeren Synchronring 26 ausgebildeten Rampe 40 entlang, wobei die Konturlinie der Rampe 40 in Richtung des zweiten Gangrades 13 wenigstens anfangs einen ansteigenden Verlauf aufweist.

Abschließend soll anhand des zweiten Ausführungsbeispiels die Funktionsweise der Schaltkupplung 1 erklärt werden. Der Schaltvorgang beginnt durch axiales Bewegen der Schaltstange 20 auf das zweite Gangrad 13 zu. Dabei wird die axiale Verschiebung über das Verbindungselement 24 auf die Schaltmuffe 5 übertragen, wodurch sich diese ebenfalls auf das zweite Gangrad 13 zu bewegt. Ab einer gewissen axialen Verschiebung der Schaltmuffe 5 wird der äußere Synchronring 26 von dem Rastkörper 39 mit einer Kraft beaufschlagt. Dies führt dazu, dass die Reibfläche 32 des äußeren Synchronrings 26 mit der äußeren Reibfläche 28 des zweiten Synchronrings 27 und die innere Reibfläche 37 des zweiten Synchronrings 27 mit der äußeren Reibfläche 36 des inneren Synchronrings 35 in Wirkverbindung gebracht wird. Beim Vorliegen einer Drehzahldifferenz zwischen zweitem Gangrad 13 und Getriebewelle 2 werden über die reibschlüssigen Verbindungen zwischen den Synchronringen 26, 27, 35 Drehmomente auf diese übertragen. Dadurch wird der äußere Synchronring 26 leicht verdreht, wodurch die Sperrverzahnung 31 das weitere Durchgleiten der Schaltmuffe 5 in Richtung des zweiten Gangrades 13 verhindert. Nach dem Angleichen der Drehzahlen zwischen dem zweiten Gangrad 13 und der Schaltmuffe 5 entfällt dieses Drehmoment und die Schaltmuffe 5 kann weiter Richtung zweites Gangrad 13 verschoben werden und in die zweite Kupplungsverzahnung 19 des zweiten Kupplungskörpers 16 eingreifen.

Im Vergleich zu einer Schaltkupplung bei der die Schaltbewegung über eine außerhalb der Getriebewelle angeordnete Schaltstange und einer daran befestigten Schaltgabel bzw. Schaltschwinge erfolgt, zeichnet sich diese Lösung durch ihren geringeren Bauraum aus. Ein weiterer Vorteil liegt in dem kürzeren Abstand zwischen Schaltstange 20 und Angriffspunkt des Verbindungselements 24, wodurch die Biegemomente, im Vergleich zu einer Ausführungsform mit Schaltgabel, deutlich reduziert werden. Weiterhin kann durch das symmetrische Anordnen mehrerer Verbindungselemente 24 das Biegeelement auf die Schaltstange 20 eliminiert werden. Dies führt dazu, dass sowohl an die Schaltstange 20 als auch an die Verbindungselemente 24 geringere Festigkeitsanforderungen gestellt werden müssen und damit diese kostengünstiger und gewichtssparend hergestellt werden können.

Die axiale Verschiebung der Schaltstange 20 kann sowohl, wie beim manuellen Handschaltgetriebe üblich, über ein Schaltgestänge oder, wie bei automatisierten Getrieben üblich, elektrisch, beispielsweise mit Hilfe von Stellmotoren, verursacht werden.

Weiterhin ist es möglich die Verbindungselemente 24 schaltbar auszuführen. Schaltbar heißt in diesem Zusammenhang, dass sie wahlweise in einem von zwei Betriebszuständen (geschaltet, nicht geschaltet) gehalten werden, wobei die Verbindungselemente 24 im geschalteten Zustand in die Schaltmuffe 5 eingreifen, während sie beim nicht geschaltet Zustand nicht in die Schaltmuffe 5 eingreifen. Dies hat den Vorteil, dass bei einer Anordnung von mehr als zwei Gangrädern auf einer Getriebewelle 2 eine Schaltstange 20 ausreicht, um jeden beliebigen Gang einzulegen, wobei die nicht benötigten Schaltmuffen in der Neutralstellung verbleiben.

### Bezugszahlenliste

- 1: Schaltkupplung
- 2: Getriebewelle
- 3: erste Verzahnung
- 4: zweite Verzahnung
- 5: Schaltmuffe
- 6: Nabenteil
- 7: erstes Blechumformteil
- 8: zweites Blechumformteil
- 9: radial verlaufender Abschnitt
- 10: axial verlaufender Abschnitt
- 11: erste Kupplungsverzahnung
- 12: erstes Gangrad
- 13: zweites Gangrad
- 14: Wälzlager
- 15: erster Kupplungskörper
- 16: zweiter Kupplungskörper
- 17: erster Absatz
- 18: zweiter Absatz
- 19: zweite Kupplungsverzahnung
- 20: Schaltstange
- 21: äußere Mantelfläche
- 22: innere Mantelfläche
- 23: Aussparung
- 24: Verbindungselement
- 25: Aufnahme
- 26: äußerer Synchronring
- 27: zweiter Synchronring
- 28: Reibfläche
- 29: Vorsprünge
- 30: Ausnehmung
- 31: Sperrverzahnung
- 32: Reibfläche
- 33: Mitnehmernasen
- 34: Federelement
- 35: innerer Synchronring
- 36: Reibfläche
- 37: Reibfläche
- 38: Gehäuse
- 39: Rastkörper
- 40: Rampe

## Patentansprüche

1. Schaltkupplung (1) für ein Schaltgetriebe, zum Kuppeln eines Gangrades (12,13) an seine Getriebewelle (2), bestehend aus
- einer Getriebewelle (2),
- zumindest einem Gangrad (12, 13), welches drehbar auf der Getriebewelle (2) angebracht ist,
- einem Kupplungskörper (15, 16), der drehfest mit dem Gangrad (12, 13) verbunden und mit einer ersten Kupplungsverzahnung (11) versehen ist und
- einer Schaltmuffe (5), die auf der Getriebewelle (2) drehfest und axial verschiebbar angebracht und mit einer axial verlaufenden zweiten Kupplungsverzahnung (19) versehen ist, wobei die zweite Kupplungsverzahnung (19) bei axialer Bewegung der Schaltmuffe (5) auf das Gangrad (12, 13) zu mit der ersten Kupplungsverzahnung (11) in Eingriff gebracht werden kann, wobei
- ein äußerer Synchronring (26) zwischen Gangrad (12, 13) und Schaltmuffe (5) angebracht ist, der mit einer inneren, konisch ausgebildeten Reibfläche (32) und einer radial nach außen stehenden Sperrverzahnung (31) versehen ist, wobei der äußere Synchronring (26), bis auf einen kleinen Verdrehwinkel, mit der Getriebewelle (2) drehfest verbunden ist,
- und wobei ein zweiter Synchronring (27) zwischen Gangrad (12, 13) und äußerem Synchronring (26) angebracht ist, der mit einer äußeren konisch ausgebildeten Reibfläche (28) versehen ist, wobei der zweite Synchronring (27) verdrehfest mit dem Kupplungskörper (15, 16) verbunden ist und die äußere Reibfläche (28) mit der inneren Reibfläche (32) des äußeren Synchronrings (26) in Eingriff gebracht werden kann, **dadurch gekennzeichnet, dass**
- die Getriebewelle (2) als Hohlwelle ausgeführt ist, wobei diese an der Position der Schaltmuffe (5) und über den Verschiebeweg der Schaltmuffe (5) mit zumindest einer Aussparung (23) versehen ist,
- die Schaltmuffe (5) an dem an der Getriebewelle (2) anliegenden Innenumfang mit mindestens einer radialen Aufnahme (25) versehen ist, die zur Getriebewelle (2) hin offen ist,
- eine axial bewegbare Schaltstange (20) konzentrisch innerhalb der Getriebewelle (2) verläuft,
- zumindest ein Verbindungselement (24) von der Schaltstange (20) ausgehend in die Schaltmuffe (5) eingreift, und
- das Verbindungselement (24) als radial verlaufender Mitnehmer ausgeführt ist, der durch die Aussparung (23) der Getriebewelle (2) hindurch in die Aufnahme (25) der Schaltmuffe (5) eingreift.

2. Schaltkupplung (1) nach Anspruch 1, **dadurch gekennzeichnet, dass** die Getriebewelle (2) und die Schaltstange (20) durch formschlüssige Mittel gegen relative Verdrehung in Umfangsrichtung gesichert sind.

3. Schaltkupplung (1) nach Anspruch 1, **dadurch gekennzeichnet, dass** pro Verbindungselement (24) eine Aufnahme (25) vorgesehen ist, in die es eingreift.

4. Schaltkupplung (1) nach Anspruch 1, **dadurch gekennzeichnet, dass** die Aufnahme (25) als ringförmig umlaufende Nut ausgebildet ist.

5. Schaltkupplung (1) nach Anspruch 1, **dadurch gekennzeichnet, dass** die Schaltmuffe (5) aus zwei Komponenten (7, 8) besteht, die beide einen Teil der Nabe tragen und aneinander befestigt sind.

6. Schaltkupplung (1) nach Anspruch 1, **dadurch gekennzeichnet, dass** die Komponenten (7, 8) der Schaltmuffe durch einen spanlosen Umformprozess aus Blechteilen gefertigt sind.

7. Schaltkupplung (1) nach Anspruch 1, **dadurch gekennzeichnet, dass** die Schaltstange (20) in der Getriebewelle (2) längs verschiebbar gelagert ist.

8. Schaltkupplung (1) nach Anspruch 7, **dadurch gekennzeichnet, dass** die Lagerung der Schaltstange (20) in der Getriebewelle (2) als Gleitlager ausgeführt ist.

9. Schaltkupplung (1) nach Anspruch 7, **dadurch gekennzeichnet, dass** die Lagerung der Schaltstange (20) in der Getriebewelle (2) als Wälzlager ausgeführt ist.

10. Schaltkupplung (1) nach Anspruch 1, **dadurch gekennzeichnet, dass** der zweite Synchronring (27) mit einer inneren, konischen Reibfläche (37) versehen ist, dass zwischen Gangrad (12, 13) und zweiten Synchronring (27) ein innerer Synchronring (35) angebracht ist, der mit einer äußeren, konischen Reibfläche (36) versehen ist, wobei die innerer Reibfläche (37) des zweiten Synchronrings (27) mit der äußeren Reibfläche (36) des inneren Synchronrings (35) in Eingriff gebracht werden kann.

11. Schaltkupplung (1) nach Anspruch 1, **dadurch gekennzeichnet, dass** zwischen dem äußeren Synchronring (26) und der Schaltmuffe (5) mindestens ein Federelement (34) angeordnet ist, welches bei Verschiebung der Schaltmuffe (5) auf das Gangrad (12, 13) zu, eine axiale Kraft von der Schaltmuffe (5) auf den äußeren Synchronring (26) überträgt und sich an der Schaltmuffe (5) abstützt.

12. Schaltkupplung (1) nach Anspruch 11, **dadurch gekennzeichnet, dass** das Federelement (34) in der Schaltmuffe (5) aufgenommen ist.

13. Schaltkupplung (1) nach Anspruch 11, **dadurch gekennzeichnet, dass** das Federelement (34) eine Schraubenfeder ist.

14. Schaltkupplung (1) nach Anspruch 11, **dadurch gekennzeichnet, dass** das Federelement (34) durch eine radial auf einem Nabenteil (6) der Schaltmuffe (5) zentrierte Tellerfeder gebildet ist.

15. Schaltkupplung (1) nach Anspruch 12, **dadurch gekennzeichnet, dass** das Federelement (34) in einem Gehäuse (38) aufgenommen ist und die Schaltkraft über einen zumindest teilweise im Gehäuse (38) gehaltenen Rastkörper (39) auf den äußeren Synchronring (26) überträgt.

16. Schaltkupplung (1) nach Anspruch 15, **dadurch gekennzeichnet, dass** der Rastkörper (39) an einer am äußeren Synchronring (26) ausgebildeten Rampe (40) entlang läuft, wobei die Konturlinie der Rampe (40) in Richtung des Gangrades (12, 13) wenigstens anfangs einen ansteigenden Verlauf aufweist.

## Claims

1. Gearshift clutch (1) for a manual transmission, for coupling a gearwheel (12, 13) to its transmission shaft (2), comprising
- a transmission shaft (2),
- at least one gearwheel (12, 13) that is mounted for rotation on the transmission shaft (2),
- a clutch body (15, 16) that is fixed in rotation to the gearwheel (12, 13) and is provided with a first clutch gearing (11) and
- a gearshift sleeve (5) that is fixed in rotation to the transmission shaft (2) and is axially displaceable while being provided with an axially extending second clutch gearing (19) which, during an axial movement of the gearshift sleeve (5) towards the gearwheel (12, 13), can be brought to mesh with the first clutch gearing (11), wherein
- an outer synchroniser ring (26) is arranged between the gearwheel (12, 13) and the gearshift sleeve (5), which outer synchroniser ring (26) is provided with an inner conical friction surface (32) and a radially outwards extending locking gearing (31) and which outer synchroniser ring (26), but for a small angle of rotation, is connected rotationally fast to the transmission shaft (2),
- and a second synchroniser ring (27) is arranged between the gearwheel (12, 13) and the outer synchroniser ring (26), which second synchroniser ring (27) is provided with an outer conical friction surface (28) and is connected rotationally fast to the clutch body (15, 16), and the outer friction surface (28) can be brought to mesh with the inner friction surface (32) of the outer synchroniser ring (26), **characterised in that**
- the transmission shaft (2) is configured as a hollow shaft and comprises at least one opening (23) at the position of the gearshift sleeve (5) and along the path of displacement of the gearshift sleeve (5),
- on the inner periphery bearing against the transmission shaft (2), the gearshift sleeve (5) comprises at least one radial reception (25) that is open towards the transmission shaft (2),
- an axially movable gearshift rod (20) extends concentrically within the transmission shaft (2),
- at least one connecting element (24) starting from the gearshift rod (20) engages into the gearshift sleeve (25), and
- the connecting element (24) is configured as a radially extending entraining element that engages through the opening (23) of the transmission shaft (2) into the reception (25) of the gearshift sleeve (5).

2. Gearshift clutch (1) according to claim 1, **characterised in that** the transmission shaft (2) and the gearshift rod (20) are secured against relative rotation in peripheral direction by mating means.

3. Gearshift clutch (1) according to claim 1, **characterised in that** one reception (25) is provided per connecting element (24), into which reception (25) this engages.

4. Gearshift clutch (1) according to claim 1, **characterised in that** the reception (25) is configured as a continuous annular groove.

5. Gearshift clutch (1) according to claim 1, **characterised in that** the gearshift sleeve (5) is made up of two components (7, 8), which carry, each one, a portion of the hub and are fixed to each other.

6. Gearshift clutch (1) according to claim 1, **characterised in that** the components (7, 8) of the gearshift sleeve are made out of sheet metal parts without chip removal by a shaping method.

7. Gearshift clutch (1) according to claim 1, **characterised in that** the gearshift rod (20) is mounted for axial displacement in the transmission shaft (2).

8. Gearshift clutch (1) according to claim 7, **characterised in that** the mounting of the gearshift rod (20) in the transmission shaft (2) is configured as a sliding bearing.

9. Gearshift clutch (1) according to claim 7, **characterised in that** the mounting of the gearshift rod (20) in the transmission shaft (2) is configured as a rolling bearing.

10. Gearshift clutch (1) according to claim 1, **characterised in that** the second synchroniser ring (27) is provided with an inner conical friction surface (37), an inner synchroniser ring (35) is arranged between the gearwheel (12, 13) and the second synchroniser ring (27), which inner synchroniser ring (35) is provided with an outer conical friction surface (36), and the inner friction surface (37) of the second synchroniser ring (27) can be brought to mesh with the outer friction surface (36) of the inner synchroniser ring (35).

11. Gearshift clutch (1) according to claim 1, **characterised in that** at least one spring element (34) is arranged between the outer synchroniser ring (26) and the gearshift sleeve (5), which spring element (34), during a displacement of the gearshift sleeve (5) towards the gearwheel (12, 13) transmits an axial force from the gearshift sleeve (5) to the outer synchroniser ring (26) and is supported on the gearshift sleeve (5).

12. Gearshift clutch (1) according to claim 11, **characterised in that** the spring element (34) is lodged in the gearshift sleeve (5).

13. Gearshift clutch (1) according to claim 11, **characterised in that** the spring element (34) is a coil spring.

14. Gearshift clutch (1) according to claim 11, **characterised in that** the spring element (34) is constituted by a disc spring that is radially centered on a hub portion (6) of the gearshift sleeve (5).

15. Gearshift clutch (1) according to claim 12, **characterised in that** the spring element (34) is lodged in a housing (38) and transmits the gear shifting force to the outer synchroniser ring (26) through a detent body (39) that is at least partially retained in the housing (38).

16. Gearshift clutch (1) according to claim 15, **characterised in that** the detent body (39) runs along a ramp (40) configured on the outer synchroniser ring (26), and the contour line of the ramp (40) extends, at least initially rising, in the direction of the gearwheel (12, 13).

## Revendications

1. Embrayage (1) pour une boîte de vitesse manuelle pour l'accouplement d'une roue dentée (12, 13) à son arbre (2) de transmission, ledit embrayage (1) comprenant
- un arbre (2) de transmission,
- au moins une roue dentée (12, 13) qui est disposée mobile en rotation sur l'arbre (2) de transmission,
- un corps (15, 16) d'embrayage qui est immobilisé en rotation sur la roue dentée (12, 13) et est muni d'une première denture (11) d'embrayage et
- un manchon (5) de changement de vitesse qui est immobilisé en rotation sur l'arbre (2) de transmission et est axialement déplaçable en étant muni d'une seconde denture (19) d'embrayage qui s'étend en direction axiale, cette seconde denture (19) d'embrayage, lors d'un mouvement axial du manchon (5) de changement de vitesse vers la roue dentée (12, 13), pouvant être amenée en prise avec la première denture (11) d'embrayage, dans lequel
- un anneau extérieur (26) de synchronisation est disposé entre la roue dentée (12, 13) et le manchon (5) de changement de vitesse, ledit anneau extérieur (26) de synchronisation étant muni d'une surface intérieure conique frottante (32) et d'une denture (31) d'arrêt orientée radialement vers l'extérieur, et ledit anneau extérieur (26) de synchronisation étant immobilisé en rotation, à un petit angle de rotation près, sur l'arbre (2) de transmission,
- un second anneau (27) de synchronisation est agencé entre la roue dentée (12, 13) et l'anneau extérieur (26) de synchronisation, ledit second anneau (27) de synchronisation étant muni d'une surface extérieure conique frottante (28) en étant immobilisé en rotation sur le corps (15, 16) d'embrayage, et la surface extérieure frottante (28) peut être amenée en prise avec la surface intérieure frottante (32) de l'anneau extérieur (26) de synchronisation, **caractérisé en ce que**
- l'arbre (2) de transmission est configuré sous la forme d'un arbre creux qui est muni, au niveau de la position du manchon (5) de changement de vitesse et sur la voie de déplacement du manchon (5) de changement de vitesse, d'au moins une ouverture (23),
- le manchon (5) de changement de vitesse est muni, sur la périphérie intérieure qui s'appuie contre l'arbre (2) de transmission, au moins d'une réception radiale (25) qui est ouverte vers l'arbre (2) de transmission,
- une tringle (20) de changement de vitesse, qui est axialement déplaçable, s'étend concentriquement à l'intérieur de l'arbre (2) de changement de vitesse,
- au moins un élément de liaison (24) s'engage à partir de la tringle (20) de changement de vitesse dans le manchon (5) de changement de vitesse, et
- l'élément de liaison (24) est configuré sous la forme d'un entraîneur qui s'étend en direction radiale et s'engage au travers de l'ouverture (23) de l'arbre (2) de transmission dans la réception (25) du manchon (5) de changement de vitesse.

2. Embrayage (1) selon la revendication 1, **caractérisé en ce que** l'arbre (2) de transmission et la tringle (2) de changement de vitesse sont sécurisés contre contournement relatif en direction périphérique par des moyens d'engagement positif.

3. Embrayage (1) selon la revendication 1, **caractérisé en ce que,** pour chaque élément de liaison (24) est prévue une réception (25) dans laquelle il s'engage.

4. Embrayage (1) selon la revendication 1, **caractérisé en ce que** la réception (25) est configurée sous la forme d'une rainure annulaire continue.

5. Embrayage (1) selon la revendication 1, **caractérisé en ce que** le manchon (5) de changement de vitesse est composé de deux composants (7, 8) qui portent, à chaque fois, une partie du moyeu et qui sont fixés, l'un à l'autre.

6. Embrayage (1) selon la revendication 1, **caractérisé en ce que** les composants (7, 8) du manchon de changement de vitesse sont fabriqués sans enlèvement de copeaux par une méthode de formage à partir de pièces en tôle.

7. Embrayage (1) selon la revendication 1, **caractérisé en ce que** la tringle (20) de changement de vitesse est montée en déplacement longitudinal dans l'arbre (2) de transmission.

8. Embrayage (1) selon la revendication 7, **caractérisé en ce que** le montage de la tringle (20) de changement de vitesse dans l'arbre (2) de transmission est configuré sous la forme d'un palier lisse.

9. Embrayage (1) selon la revendication 7, **caractérisé en ce que** le montage de la tringle (20) de changement de vitesse dans l'arbre (2) de transmission est configuré sous la forme d'un palier à roulement.

10. Embrayage (1) selon la revendication 1, **caractérisé en ce que** le second anneau (27) de synchronisation est muni d'une surface intérieure conique frottante (37), que, entre la roue dentée (12, 13) et le second anneau (27) de synchronisation, est disposé un anneau intérieur (35) de synchronisation qui est muni d'une surface extérieure conique frottante (36), et **en ce que**, la surface intérieure frottante (37) du second anneau (27) de synchronisation peut être amenée en prise avec la surface extérieure frottante (36) du anneau intérieur (35) de synchronisation.

11. Embrayage (1) selon la revendication 1, **caractérisé en ce que**, entre l'anneau extérieur (26) de synchronisation et le manchon (5) de changement de vitesse est agencé, au moins, un élément ressort (34) qui, lors du déplacement du manchon (5) de changement de vitesse vers la roue dentée (12, 13), transmet une force axiale à partir du manchon (5) de changement de vitesse à l'anneau extérieur (26) de synchronisation et se supporte sur le manchon (5) de changement de vitesse.

12. Embrayage (1) selon la revendication 11, **caractérisé en ce que** l'élément ressort (34) est logé dans le manchon (5) de changement de vitesse.

13. Embrayage (1) selon la revendication 11, **caractérisé en ce que** l'élément ressort (34) est un ressort à boudin.

14. Embrayage (1) selon la revendication 11, **caractérisé en ce que** l'élément ressort (34) est constitué par un ressort Belleville qui est centré en direction radiale sur une partie du moyeu (6).

15. Embrayage (1) selon la revendication 12, **caractérisé en ce que** l'élément ressort (34) est logé dans un boîtier (38) et transmet la force de changement de vitesse à l'anneau extérieur (26) de synchronisation par l'intermédiaire d'un corps (39) d'arrêt qui est retenu, au moins partiellement, dans le boîtier (38).

16. Embrayage (1) selon la revendication 15, **caractérisé en ce que** le corps (39) d'arrêt court le long d'une rampe (40) configurée sur l'anneau extérieur (26) de synchronisation, la ligne du contour de la rampe (40) s'étendant en montant, au moins au commencement, en direction de la roue dentée (12, 13).
